# EUROPEAN PATENT APPLICATION

(11) **EP 4 501 893 A1**
(43) Date of publication of application: **05.02.2025**
(21) Application number: 23780493.5
(22) Date of filing: 28.03.2023
(51) Int. Cl.: C04B 41/88

(54) **CERAMIC STRUCTURE**

(30) Priority: 28.03.2022 JP 2022052427
(71) Applicant: Kyocera Corporation, Kyoto-shi, Kyoto 612-8501 (JP)
(72) Inventor: UENO, Takahiro, Kyoto-shi, Kyoto 612-8501 (JP); SHIBATA, Ryo, Kyoto-shi, Kyoto 612-8501 (JP); TOYODA, Satoshi, Kyoto-shi, Kyoto 612-8501 (JP)
(74) Representative: Viering, Jentschura & Partner mbB Patent- und Rechtsanwälte
(86) International application number: PCT/JP2023/012448
(87) International publication number: WO 2023/190484

(57) **Abstract**

A ceramic structure includes a base, a first layer, and a second layer. The base is made of a ceramic. The first layer is positioned to be in contact with a surface of the base and is made of a ceramic having a composition different from that in the base. The second layer is positioned to be in contact with a surface of the first layer and is made of metal. In a cross section intersecting the surface of the base, when D_{B} is a mean grain size of a main crystal in the base, D₁ to Dₙ are measured values of thicknesses of the first layer measured every 1 µm, and D_{AVE} is a mean value of D₁ to Dₙ, the first layer has irregularities where |Dₙ - D_{AVE}| is larger than D_{B}/2.

## Description

### TECHNICAL FIELD

Embodiments of the present disclosure relate to a ceramic structure.

### BACKGROUND OF INVENTION

Ceramics are widely used for structures from the perspectives of strength, insulation, heat resistance, and the like. As the ceramic structure, a structure in which a metallization layer is provided on a surface of a base made of a ceramic is known. For example, see Patent Document 1.

### CITATION LIST

### PATENT LITERATURE

Patent Document 1: JP 4348112 B

### SUMMARY

A ceramic structure of the present disclosure includes a base, a first layer, and a second layer. The base is made of a ceramic. The first layer is positioned to be in contact with a surface of the base and is made of a ceramic having a composition different from a composition in the base. The second layer is positioned to be in contact with a surface of the first layer and is made of metal. In a cross section intersecting the surface of the base, when D_{B} is a mean grain size of a main crystal in the base, D₁ to Dₙ are measured values of thicknesses of the first layer measured every 1 µm, and D_{AVE} is a mean value of D₁ to Dₙ, the first layer has irregularities where |Dₙ - D_{AVE}| is larger than D_{B}/2.

### BRIEF DESCRIPTION OF THE DRAWINGS

FIG. 1 is a perspective view illustrating an example of a configuration of a ceramic structure according to an embodiment.
FIG. 2 is an enlarged cross-sectional view illustrating the example of the configuration of the ceramic structure according to the embodiment.
FIG. 3 is a diagram showing a SEM photograph of a base surface of a ceramic structure according to Example 1.
FIG. 4 is a diagram showing a SEM photograph of a base surface of a ceramic structure according to Reference Example 1.
FIG. 5 is a diagram showing a SEM photograph of a cross-sectional view in the vicinity of a surface of the ceramic structure according to Example 1.
FIG. 6 is a diagram showing an Al distribution in a cross-sectional view in the vicinity of the surface of the ceramic structure according to Example 1.
FIG. 7 is a diagram showing a Mn distribution in a cross-sectional view in the vicinity of the surface of the ceramic structure according to Example 1.
FIG. 8 is a diagram showing a Mg distribution in a cross-sectional view in the vicinity of the surface of the ceramic structure according to Example 1.
FIG. 9 is a diagram showing a SEM photograph of a cross-sectional view in the vicinity of a surface of the ceramic structure according to Reference Example 1.
FIG. 10 is a diagram showing an Al distribution in a cross-sectional view in the vicinity of the surface of the ceramic structure according to Reference Example 1.
FIG. 11 is a diagram showing a Mn distribution in a cross-sectional view in the vicinity of the surface of the ceramic structure according to Reference Example 1.
FIG. 12 is a diagram showing a Mg distribution in a cross-sectional view in the vicinity of the surface of the ceramic structure according to Reference Example 1.

### DESCRIPTION OF EMBODIMENTS

Hereinafter, embodiments of a ceramic structure disclosed in the present disclosure will be described with reference to the accompanying drawings. The present disclosure is not limited by the following embodiments. Embodiments can be appropriately combined so as not to contradict each other in terms of processing content. In the following embodiments, the same portions are denoted by the same reference signs, and redundant explanations are omitted.

In the embodiments described below, expressions such as "constant", "orthogonal", "perpendicular", or "parallel" may be used, but these expressions do not need to be strictly "constant", "orthogonal", "perpendicular", or "parallel". That is, each of the expressions described above allows deviations in, for example, manufacturing accuracy, installation accuracy, and the like.

Ceramics are widely used for structures from the perspectives of strength, insulation, heat resistance, and the like. As the ceramic structure, a structure in which a metallization layer is provided on a surface of a base made of a ceramic is known.

However, in the related art, there is room for further improvement in terms of improving adhesion between the base made of a ceramic and the metallization layer. Thus, a technique is expected to overcome the aforementioned problem and improve the adhesion between the base made of a ceramic and the metallization layer in the ceramic structure.

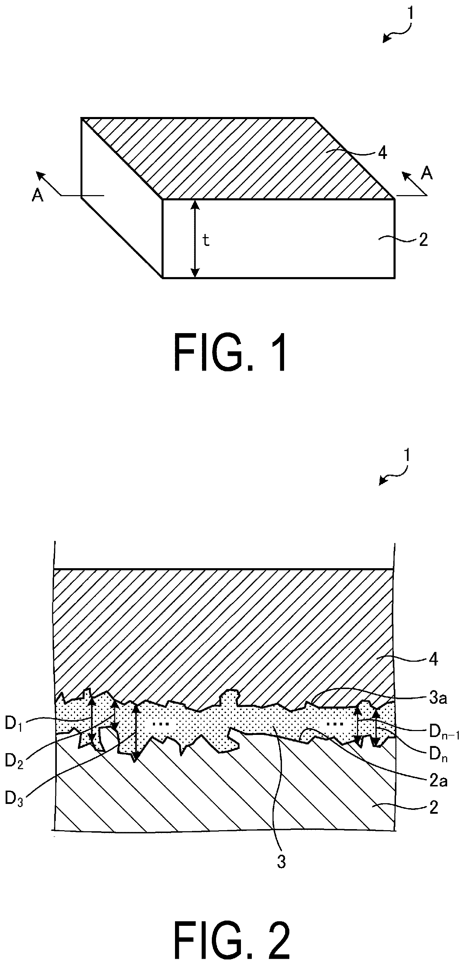

FIG. 1 is a schematic perspective view of a ceramic structure 1 according to an embodiment, and FIG. 2 is an enlarged cross-sectional view illustrating the example of the configuration of the ceramic structure 1 according to the embodiment. Note that FIG. 2 is a cross-sectional view taken along line A-A illustrated in FIG. 1.

As illustrated in FIGs. 1 and 2, the ceramic structure 1 according to the embodiment includes a base 2, a first layer 3, and a second layer 4. The base 2 has, for example, a rectangular parallelepiped shape and has a surface 2a. Note that in the present disclosure, the shape of the base 2 is not limited to the example illustrated in FIG. 2, and may be any shape such as a plate shape, a frame shape, or a pillar shape.

The base 2 is a sintered ceramic body. Examples of the ceramic constituting the base 2 include ceramics containing aluminum oxide (Al₂O₃), silicon carbide (SiC), silicon carbonitride (SiCN), titanium carbide (TiC), and titanium carbonitride (TiCN) as main components.

Note that in the present disclosure, the term "main component" refers to a component that accounts for 80 mass% or more of a total 100 mass% of the components constituting the ceramic. Each of components contained in the ceramic may be identified with an X-ray diffractometer using CuKα rays, and a content of each component may be determined, for example, with an inductively coupled plasma (ICP) optical emission spectrometer or an X-ray fluorescence analyzer.

The base 2 containing aluminum oxide as the main component exhibits excellent mechanical characteristics while being relatively inexpensive in terms of raw material cost and manufacturing cost as well among ceramics.

The base 2 containing aluminum oxide as the main component may further contain, for example, oxides of magnesium (Mg), calcium (Ca), and silicon (Si).

As illustrated in FIG. 2, the first layer 3 is positioned to be in contact with the surface 2a of the base 2. The first layer 3 is made of a ceramic having a composition different from that in the base 2. Constituent elements of the first layer 3 may include, for example, at least one element contained in the base 2 and at least one element contained in the second layer 4.

The second layer 4 is positioned to be in contact with a surface 3a of the first layer 3. The second layer 4 is made of metal and is also referred to as a metallization layer. The second layer 4 may be formed from, for example, a metal material such as molybdenum (Mo), manganese (Mn), tungsten (W), copper (Cu), silver (Ag), palladium (Pd), gold (Au), or platinum (Pt), or an alloy of these metal materials.

The second layer 4 may contain, for example, molybdenum and manganese. Thus, the second layer 4, which is a metal layer, can be formed with good adhesion to the base 2 made of a ceramic.

The second layer 4 can be formed by, for example, applying a metal paste prepared by kneading powder of the above metal material together with an organic solvent, a binder, and the like to a ceramic green sheet that serves as the base 2, and simultaneously sintering the ceramic green sheet with the metal paste in a reducing atmosphere. At this time, the first layer 3, which is an intermediate layer, is formed at an interface between the base 2 and the second layer 4.

Note that although the example in FIGs. 1 and 2 illustrates an example in which the second layer 4 is exposed, the present disclosure is not limited to this example, and another layer such as nickel (Ni) plating may be provided on a surface of the second layer 4.

In the embodiment, in a cross section intersecting the surface 2a of the base 2, that is, a cross section as illustrated in FIG. 2, D_{B} is a mean grain size of a main crystal (not illustrated) in the base 2, D₁ to Dₙ are measured values of thicknesses of the first layer 3 measured every 1 µm, and D_{AVE} is a mean value of D₁ to Dₙ. Note that n in Dₙ is an integer. Note that the main crystal refers to crystals that occupy 50 area% or more in the base.

In the embodiment, the first layer 3 has irregularities where |Dₙ - D_{AVE}| is larger than D_{B}/2. Thus, the irregularities in the first layer 3, which are larger than a value based on the grain size of the main crystal in the base 2, enhance an anchor effect of the first layer 3 on the surface 2a of the base 2.

Therefore, according to the embodiment, since the adhesion of the first layer 3 to the base 2 can be enhanced, the adhesion between the base 2 and the second layer 4 can be improved. When a minimum contact width between the base 2 and the first layer 3 is 1 mm or more, the adhesion is particularly high. From the viewpoint of adhesion, the minimum contact width may be 2 mm or more, and even 3 mm or more.

In the embodiment, the main crystal of the base 2 may be aluminum oxide. That is, the main component of the base 2 may be aluminum oxide. Thus, the ceramic structure 1 can exhibit excellent mechanical characteristics while being relatively inexpensive in terms of raw material cost and manufacturing cost as well.

In the embodiment, the constituent elements of the first layer 3 may include at least one element contained in the base 2 and at least one element contained in the second layer 4. For example, when the base 2 contains Al, Mg, Ca, Si, and oxygen (O) and the second layer 4 contains Mo and Mn, the first layer 3 may contain Mg, Al, Mn, and O.

Thus, the first layer 3, which is the intermediate layer, contains both the elements contained in the base 2 and the second layer 4, thereby the adhesion between the base 2 and the first layer 3 and the adhesion between the first layer 3 and the second layer 4 can be improved.

Consequently, according to the embodiment, the adhesion between the base 2 and the second layer 4 can be further improved.

In the embodiment, the first layer 3 may contain crystals having a spinel crystal structure. For example, when the base 2 contains Al, Mg, Ca, Si, and O, and the second layer 4 contains Mo and Mn, the first layer 3 may contain at least either of MgO·Al₂O₃ spinel crystals and MnO·Al₂O₃ spinel crystals.

Thus, a thermal expansion coefficient of the base 2 containing aluminum oxide as a main component and a thermal expansion coefficient of the first layer 3 containing the spinel crystals described above can be made close to each other. Consequently, according to the embodiment, peeling between the base 2 and the second layer 4 due to thermal cycles can be reduced.

In the embodiment, as illustrated in FIG. 1, a thickness t of the base 2 when the second layer 4 is placed on an upper surface thereof may be 2.0 mm or more. Thus, the ceramic structure 1 having high insulation properties with respect to the second layer 4, which is the metallization layer, can be achieved.

### EXAMPLES

Examples of the present disclosure will be specifically described below. Note that in the examples described below, the base 2 containing aluminum oxide as a main crystal is described, but the present disclosure is not limited to the following examples.

### Examples 1 to 3

First, powders of aluminum oxide, which is the main component of the base 2, and powders of silicon oxide (SiO₂), magnesium oxide (MgO), and calcium oxide (CaO) as sintering aids, were prepared. Then, the powders of aluminum oxide and the powders of the sintering aids were mixed so as to be Al₂O₃: 90 mass%, SiO₂: 7 mass%, MgO: 2 mass%, and CaO: 1 mass%, and water and a dispersant were added, and then the mixture is mixed for a predetermined period of time using a ball mill, a bead mill, or the like to obtain a primary slurry.

Subsequently, an organic binder was added to and mixed with the obtained primary slurry to obtain a secondary slurry. Then, the obtained secondary slurry was spray-dried to obtain granules containing aluminum oxide as a main component.

Subsequently, the obtained granules were filled into a predetermined molding die and press-molded into a predetermined shape, for example, a rectangular parallelepiped shape, under an appropriately set pressure to obtain a green body that serves as the base 2.

In parallel with the steps of preparing the green body that serves as the base 2, a metal paste that serves as the second layer 4 was prepared. To be specific, first, powders of molybdenum and manganese that constitute the second layer 4 and powders of titanium oxide (TiO₂) as a sintering aid were prepared.

Then, the powders of molybdenum and manganese and the powders of the sintering aid were mixed so as to be Mo: 85 mass%, Mn: 10 mass%, and TiO₂: 5 mass%, and an organic binder was further added and mixed to obtain a metal paste.

Subsequently, the metal paste was printed on a surface of the green body by a screen printing method, and sintered in a reducing atmosphere, for example, an atmosphere of 20% hydrogen and 80% nitrogen, for a predetermined period of time to obtain three samples to be Examples 1 to 3. Note that a sintering temperature in the sintering step was, for example, 1420°C.

### Reference Examples 1 to 3

First, powders of aluminum oxide, which is the main component of the base 2, and powders of silicon oxide (SiO₂), magnesium oxide (MgO), and calcium oxide (CaO) as sintering aids, were prepared. Then, the powders of aluminum oxide and the powders of the sintering aids were mixed so as to be Al₂O₃: 90 mass%, SiO₂: 7 mass%, MgO: 2 mass%, and CaO: 1 mass%, and water and a dispersant were added, and then the mixture is mixed for a predetermined period of time using a ball mill, a bead mill, or the like to obtain a primary slurry.

Subsequently, an organic binder was added to and mixed with the obtained primary slurry to obtain a secondary slurry. Then, the obtained secondary slurry was spray-dried to obtain granules containing aluminum oxide as a main component.

Subsequently, the obtained granules were filled into a predetermined molding die and press-molded into a predetermined shape, for example, a rectangular parallelepiped shape, under an appropriately set pressure. Then, the obtained molded body was primarily sintered in air to obtain a primary sintered body that serves as the base 2. Note that a sintering temperature in a primary sintering step was, for example, 1420°C.

In parallel with the steps of preparing the primary sintered body that serves as the base 2, a metal paste that serves as the second layer 4 was prepared. To be specific, first, powders of molybdenum and manganese that constitute the second layer 4 and powders of titanium oxide (TiO₂) as a sintering aid were prepared.

Then, the powders of molybdenum and manganese and the powders of the sintering aid were mixed so as to be Mo: 85 mass%, Mn: 10 mass%, and TiO₂: 5 mass%, and an organic binder was further added and mixed to obtain a metal paste.

Subsequently, the metal paste was printed on a surface of the primary sintered body by a screen printing method, and secondary-sintered in a reducing atmosphere, for example, an atmosphere of 20% hydrogen and 80% nitrogen, for a predetermined period of time to obtaining three samples to be Reference Examples 1 to 3. Note that a sintering temperature in the secondary sintering step was, for example, 1350°C.

### Various Evaluations

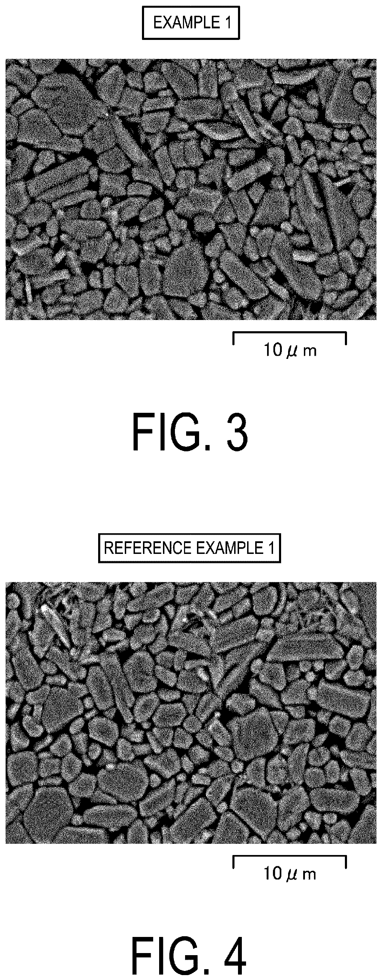

For each of the ceramic structures 1 of Examples 1 to 3 and Reference Examples 1 to 3 obtained above, a surface of the base 2 exposed to a side surface or the like was observed using a scanning electron microscope (SEM). FIG. 3 is a diagram showing a SEM photograph of a base surface of the ceramic structure 1 of Example 1, and FIG. 4 is a diagram showing a SEM photograph of a base surface of the ceramic structure 1 of Reference Example 1.

Then, using the obtained SEM photograph, the mean grain size D_{B} of aluminum oxide, which is the main crystal of the base 2, for each of Examples 1 to 3 and Reference Examples 1 to 3 was measured by a code method. To be specific, first, lines are drawn so as to divide the SEM image to be measured into five or more equal parts in a vertical direction and a horizontal direction. For each line, the number of grains in contact with that line is then counted.

Subsequently, the grain size of the grains is calculated from the counted number and a scale bar. Finally, a mean value of all the calculated grain sizes was defined as the mean grain size D_{B} of the main crystal. Note that grains that were partially invisible in the photograph were excluded from the measurement.

For each of the ceramic structures 1 of Examples 1 to 3 and Reference Examples 1 to 3 obtained above, the adhesive strength of the second layer 4 to the base 2 was also measured by a peel strength measurement method. First, samples for measurement were prepared. To be specific, nickel plating was formed on the surface of the second layer 4, and Kovar was brazed to a surface of the nickel plating with Ag solder.

Subsequently, the sample with brazed Kovar was set in a jig, and one end of a Kovar lead was chucked with a jig. Then, the second layer 4 was peeled from one end, and the adhesive strength was measured at five points every 1 mm from any position during peeling, and values were read. The adhesive strength was measured using a 98 N load cell and at a crosshead speed of 10 mm/min.

Then, a mean value of the measured values at five points was defined as the adhesive strength per measurement. Further, this measurement was performed 5 to 10 times, and a mean value of the adhesive strengths was defined as the adhesive strength of the sample. Note that a unit of the adhesive strength is N.

Each of the ceramic structures 1 of Examples 1 to 3 and Reference Examples 1 to 3 obtained above was cut, a cut surface was mirror-polished, and cross-sections of the base 2, the first layer 3, and the second layer 4 were observed using a SEM. Various elements were mapped using an electron probe micro analyzer (EPMA) in a visual field observed using a SEM.

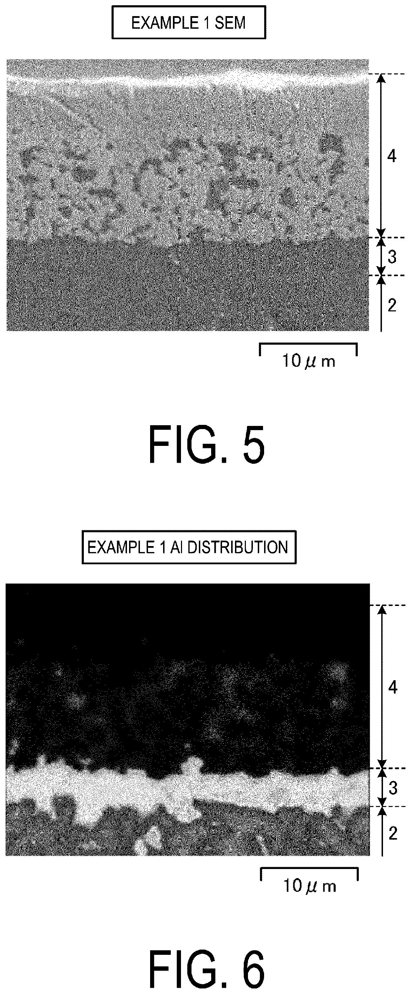

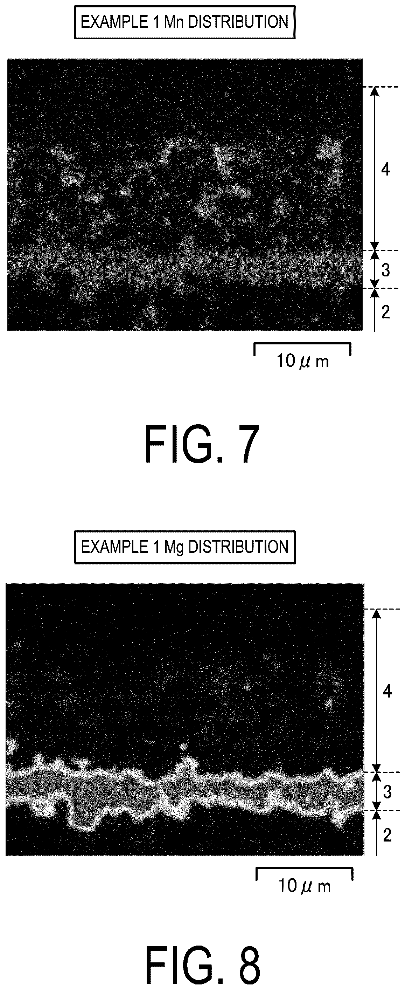

FIG. 5 is a diagram showing a SEM photograph in a cross-sectional view in the vicinity of a surface of the ceramic structure 1 of Example 1. FIGs. 6 to 8 are diagrams showing an Al distribution, a Mn distribution, and a Mg distribution, respectively, in a cross-sectional view in the vicinity of the surface of the ceramic structure 1 of Example 1.

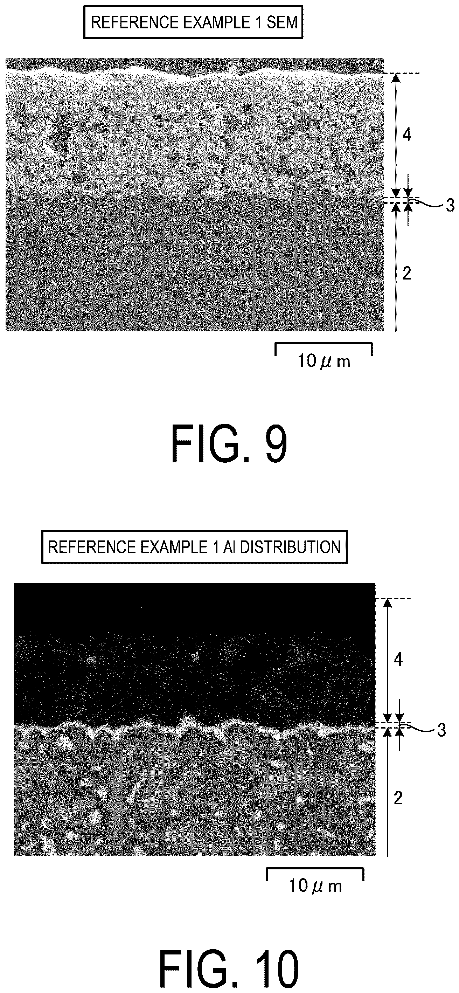

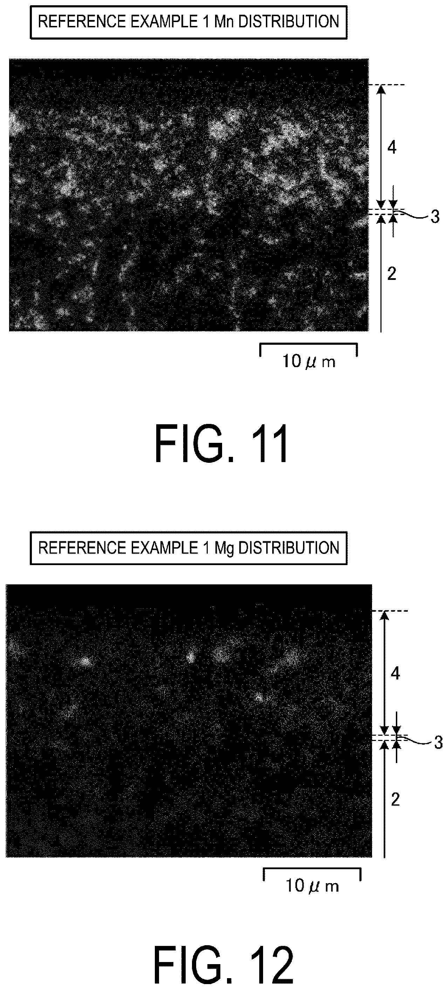

FIG. 9 is a diagram showing a SEM photograph in a cross-sectional view in the vicinity of a surface of the ceramic structure 1 of Reference Example 1. FIGs. 10 to 12 are diagrams showing an Al distribution, a Mn distribution, and a Mg distribution, respectively, in a cross-sectional view in the vicinity of the surface of the ceramic structure 1 of Reference Example 1.

As shown in FIGs. 6 to 8, in the ceramic structures 1 of Examples 1 to 3, the first layer 3, which is the intermediate layer, containing Al and Mg contained in the base 2 and Mn contained in the second layer 4 is formed between the base 2 and the second layer 4.

As shown in FIGs. 6 to 8, the first layer 3, which is the intermediate layer, is formed with a larger film thickness in the ceramic structures 1 of Examples 1 to 3 than in the ceramic structures 1 of Reference Examples 1 to 3 shown in FIGs. 10 to 12.

As shown in FIGs. 6 to 8, the first layer 3, which is the intermediate layer, has a complicated shape, that is, a shape with large irregularities, in the ceramic structures 1 of Examples 1 to 3 than in the ceramic structures 1 of Reference Examples 1 to 3.

Regarding these, it is presumed that by applying the metal paste to the surface of the green body and sintering this green body with the metal paste at the same time, movement of elements at the interface between the base 2 and the second layer 4 becomes easier than by applying the metal paste to the surface of the sintered body and sintering the metal paste separately.

For each of the ceramic structures 1 of Examples 1 to 3 and Reference Examples 1 to 3, using mapping images of the Al distribution, the Mn distribution, and the Mg distribution, a portion where the three elements were present was regarded as the first layer 3, and the thicknesses D₁ to Dₙ of the first layer 3 were measured at 20 points every 1 µm.

Note that in this case, color images directly obtained from the analyzer were used as the mapping images of the Al distribution, the Mn distribution, and the Mg distribution, instead of the gray images shown in FIGs. 6 to 8 and 10 to 12.

Then, a mean value D_{AVE} of the thickness of the first layer 3 was determined using the obtained thicknesses D₁ to Dₙ, and an absolute value |Dₙ - D_{AVE}| of a difference between each of the thicknesses D₁ to Dₙ and the mean value D_{AVE} was determined.

For each of Examples 1 to 3 and Reference Examples 1 to 3, the adhesive strength of the sample, the mean grain size D_{B} of the main crystal, thicknesses Dₙ and |Dₙ - D_{AVE}| at 20 points in the first layer 3, mean values, maximum values, minimum values, and standard deviations σ of Dₙ and |Dₙ - D_{AVE}|, and the number of measurement points where |Dₙ - D_{AVE}| is larger than D_{B}/2 (where D_{B} is the mean grain size) are shown in Table 1. Note that the results in Table 1 are values obtained by manually measuring the thicknesses D₁ to Dₙ from the color images obtained from the analyzer. In Table 1, values of the measurement points where |Dₙ - D_{AVE}| is larger than D_{B}/2 (where D_{B} is the mean grain size) are surrounded by thick frames.

### [Table 1]

**(Table 1)**

| | Example 1 | | Example 2 | | Example 3 | | Reference Example 1 | | Reference Example 2 | | Reference Example 3 | |
|---|---|---|---|---|---|---|---|---|---|---|---|---|
| Adhesive strength (N) | 98 | | 95 | | 108 | | 48 | | 53 | | 58 | |
| Mean grain size D_{B} (µm) | 1.9 | | 1.9 | | 1.9 | | 1.8 | | 1.8 | | 1.8 | |

| Measurement point | Dₙ | \|Dₙ - D_{AVE}\| | Dₙ | \|Dₙ - D_{AVE}\| | Dₙ | \|Dₙ - D_{AVE}\| | Dₙ | \|Dₙ - D_{AVE}\| | Dₙ | \|Dₙ - D_{AVE}\| | Dₙ | \|Dₙ - D_{AVE}\| |
|---|---|---|---|---|---|---|---|---|---|---|---|---|
| 1 | 3.30 | 0.76 | 2.73 | 0.35 | 3.66 | 0.39 | 0.77 | 0.05 | 0.98 | 0.02 | 1.13 | 0.26 |
| 2 | 3.64 | 0.42 | 3.91 | 0.83 | 3.66 | 0.39 | 0.65 | 0.17 | 0.79 | 0.17 | 0.86 | 0.01 |
| 3 | 409 | 0.03 | 1.89 | 1.19 | 2.27 | 1.00 | 0.81 | 0.01 | 0.93 | 0.03 | 0.65 | 0.22 |
| 4 | 5.61 | 1.55 | 4.44 | 1.36 | 3.34 | 0.07 | 0.58 | 0.24 | 1.02 | 0.06 | 0.65 | 0.22 |
| 5 | 4.62 | 0.56 | 3.69 | 0.61 | 6.48 | 3.21 | 0.65 | 0.17 | 0.93 | 0.03 | 0.65 | 0.22 |
| 6 | 3.48 | 0.58 | 3.03 | 0.05 | 2.27 | 1.00 | 1.27 | 0.45 | 0.93 | 0.03 | 0.65 | 0.22 |
| 7 | 4.20 | 0.14 | 4.44 | 1.36 | 2.50 | 0.77 | 0.77 | 0.05 | 0.74 | 0.22 | 0.86 | 0.01 |
| 8 | 3.83 | 0.23 | 2.29 | 0.79 | 2.15 | 1.12 | 0.77 | 0.05 | 0.93 | 0.03 | 0.79 | 0.08 |
| 9 | 6.78 | 2.72 | 1.58 | 1.50 | 3.42 | 0.15 | 0.50 | 0.32 | 1.11 | 0.15 | 0.65 | 0.22 |
| 10 | 2.88 | 1.18 | 1.27 | 1.81 | 5.01 | 1.74 | 0.62 | 0.20 | 0.84 | 0.12 | 1.23 | 0.36 |
| 11 | 3.52 | 0.54 | 2.99 | 0.09 | 3.10 | 0.17 | 0.85 | 0.03 | 0.84 | 0.12 | 1.13 | 0.26 |
| 12 | 3.22 | 0.84 | 2.46 | 0.62 | 3.78 | 0.51 | 1.31 | 0.49 | 1.49 | 0.53 | 0.86 | 0.01 |
| 13 | 4.28 | 0.22 | 3.30 | 0.22 | 1.95 | 1.32 | 0.81 | 0.01 | 0.84 | 0.12 | 0.86 | 0.01 |
| 14 | 3.22 | 0.84 | 3.96 | 0.88 | 2.82 | 0.45 | 0.92 | 0.10 | 0.93 | 0.03 | 0.79 | 0.08 |
| 15 | 3.98 | 0.08 | 3.60 | 0.52 | 4.21 | 0.94 | 0.77 | 0.05 | 1.11 | 0.15 | 0.93 | 0.06 |
| 16 | 4.36 | 0.30 | 2.02 | 1.06 | 3.50 | 0.23 | 0.50 | 0.32 | 0.60 | 0.36 | 0.69 | 0.18 |
| 17 | 3.98 | 0.08 | 4.04 | 0.96 | 4.21 | 0.94 | 0.85 | 0.03 | 0.74 | 0.22 | 1.51 | 0.64 |
| 18 | 4.47 | 0.41 | 2.77 | 0.31 | 3.42 | 0.15 | 0.85 | 0.03 | 1.11 | 0.15 | 0.65 | 0.22 |
| 19 | 3.67 | 0.39 | 2.29 | 0.79 | 2.50 | 0.77 | 0.69 | 0.13 | 0.84 | 0.12 | 0.51 | 0.36 |
| 20 | 4.05 | 0.01 | 4.88 | 1.80 | 1.23 | 204 | 1.46 | 0.64 | 1.49 | 0.53 | 1.37 | 0.50 |
| Mean value (µm) | 4.06 | 0.59 | 3.08 | 0.85 | 3.27 | 0.87 | 0.82 | 0.18 | 0.96 | 0.16 | 0.87 | 0.21 |
| Maximum value (µm) | 6.78 | 2.72 | 4.88 | 1.81 | 6.48 | 3.21 | 1.46 | 0.64 | 1.49 | 0.53 | 1.51 | 0.64 |
| Minimum value (µm) | 2.88 | 0.01 | 1.27 | 0.05 | 1.23 | 0.07 | 0.50 | 0.01 | 0.60 | 0.02 | 0.51 | 0.01 |
| σ (µm) | 0.88 | 0.64 | 1.02 | 0.53 | 1.18 | 0.77 | 0.26 | 0.18 | 0.22 | 0.15 | 0.27 | 0.17 |
| Number satisfying \|Dₙ - D_{AVE}\| > D_{B}/2 | 3 | | 8 | | 7 | | 0 | | 0 | | 0 | |

Comparison of Examples 1 to 3 with Reference Examples 1 to 3 shows that the adhesive strength of the second layer 4 to the base 2 is improved in Examples 1 to 3 compared to Reference Examples 1 to 3.

Comparison of Examples 1 to 3 with Reference Examples 1 to 3 shows that in Examples 1 to 3, compared to Reference Examples 1 to 3, the first layer 3 has more irregularities where |Dₙ - D_{AVE}| is larger than D_{B}/2.

That is, in the embodiment, since the first layer 3 has many irregularities where |Dₙ - D_{AVE}| is larger than D_{B}/2, the anchor effect of the first layer 3 on the surface 2a of the base 2 can be enhanced. Therefore, the adhesion between the base 2 and the second layer 4, that is, the adhesive strength, can be improved.

Comparison of Examples 1 to 3 with Reference Examples 1 to 3 shows that the anchor effect of the first layer 3 on the surface 2a of the base 2 can be further enhanced by having three or more irregularities where |Dₙ - D_{AVE}| is larger than D_{B}/2. Therefore, the adhesion between the base 2 and the second layer 4, that is, the adhesive strength, can be further improved.

For each of the ceramic structures 1 of Examples 1 to 3 and Reference Examples 1 to 3, thicknesses D₁ to Dₙ of the first layer 3 were measured at 40 points every 1 µm, and a minimum value y1 and a maximum value y2 were measured using image analysis software Image Pro ver. 10 manufactured by Media Cybernetics, Inc.

The minimum value y1 is a value of a minimum coordinate position in a layering direction at the interface between the base 2 and the first layer 3, here, in the vertical direction in the SEM image. The maximum value y2 is a value of a maximum coordinate position in a layering direction at the interface between the first layer 3 and the second layer 4.

Note that in this case, a SEM image in a different visual field from the SEM image in the visual field used when obtaining the measurement results shown in Table 1 was used. The specific steps are as follows.

First, open an image to be analyzed. Subsequently, calibrate the image according to a scale of the image using "Create Calibration Data" on the "Home" tab. As the scale of the image, a SEM photograph with a magnification of 1000 to 5000 times may be used depending on a state of the interface. Note that this time, a SEM image with a scale of 3000 times was used.

Subsequently, create an outline of a boundary portion between the first layer 3 and the second layer 4 by using a function of "Measurement Shapes-Auto Trace Freeform Curves" on the "Measurement" tab. In addition, create an outline of a boundary portion between the first layer 3 and the base 2 by using the function of "Measurement Shapes-Auto Trace Freeform Curves" on the "Measurement" tab.

Subsequently, select the two created outlines using "Select" on the "Measurement" tab. Then, measure the selected two outlines using "Continuous Distance Measurement" on the "Measurement" tab. At this time, a distance of the continuous distance measurement was 1 µm.

Subsequently, from "Measurement Items" on the "Measurement" tab, add "Line Segment Length", "Line Start Point y", and "Line End Point y" to the measurement items. Then, create a data collection table using "Collection" on the "Measurement" tab.

Finally, "mean value D_{AVE}", "maximum value of Dₙ", "minimum value of Dₙ", and "standard deviation of Dₙ" were determined from the data recorded in the data collection table. Further, a minimum value of the "Line Start Point y" was defined as a minimum value y1, a maximum value of the "Line End Point y" is defined as a maximum value y2, and a difference between the maximum value y2 and the minimum value y1 is defined as a difference D_{R}. In other words, D_{R} = y2 - y1.

For each of Examples 1 to 3 and Reference Examples 1 to 3, an adhesive strength of the sample, the mean value, the maximum value, the minimum value, and the standard deviation σ of the thicknesses Dₙ, and the difference D_{R} are shown in Table 2.

For each of Examples 1 to 3 and Reference Examples 1 to 3, the adhesive strength of the sample, and a mean grain size D_{B} of the main crystal, thicknesses Dₙ and |Dₙ - D_{AVE}| at 40 points in the first layer 3, the mean values, the maximum values, the minimum values, and the standard deviations σ of Dₙ and |Dₙ - D_{AVE}|, and the number of measurement points where |Dₙ - D_{AVE}| is larger than D_{B}/2 (where D_{B} is the mean grain size) measured using image analysis software Image Pro ver. 10 manufactured by Media Cybernetics, Inc. are shown in Table 3. Note that in Table 3, the values of the measurement points where |Dₙ - D_{AVE}| is larger than D_{B}/2 (where D_{B} is the mean grain size) are surrounded by thick frames.

### [Table 2]

**(Table 2)**

| | Example 1 | Example 2 | Example 3 | Reference Example 1 | Reference Example 2 | Reference Example 3 |
|---|---|---|---|---|---|---|
| Adhesive strength (N) | 98 | 95 | 108 | 48 | 53 | 58 |
| D_{AVE}(µm) | 4.47 | 3.34 | 3.23 | 0.59 | 0.58 | 0.57 |
| Maximum value Dₙ (µm) | 7.02 | 5.01 | 6.37 | 1.67 | 1.68 | 2.12 |
| Minimum value Dₙ (µm) | 2.83 | 0.68 | 1.14 | 0.25 | 0.35 | 0.24 |
| Dₙ σ (µm) | 1.22 | 1.03 | 0.85 | 0.30 | 0.24 | 0.38 |
| D_{R} (µm) | 8.63 | 7.15 | 8.10 | 3.11 | 3.19 | 3.25 |

### [Table 3]

**(Table 3)**

| | Example 1 | | Example 2 | | Example 3 | | Reference Example 1 | | Reference Example 2 | | Reference Example 3 | |
|---|---|---|---|---|---|---|---|---|---|---|---|---|
| Adhesive strength (N) | 98 | | 95 | | 108 | | 48 | | 53 | | 58 | |
| Mean grain size D_{B} (µm) | 1.9 | | 1.9 | | 1.9 | | 1.8 | | 1.8 | | 1.8 | |

| Measurement point | Dₙ | \|Dₙ - D_{AVE}\| | Dₙ | \|Dₙ - D_{AVE}\| | Dₙ | \|Dₙ - D_{AVE}\| | Dₙ | \|Dₙ - D_{AVE}\| | Dₙ | \|Dₙ - D_{AVE}\| | Dₙ | \|Dₙ - D_{AVE}\| |
|---|---|---|---|---|---|---|---|---|---|---|---|---|
| 1 | 4.23 | 0.24 | 1.00 | 2.35 | 3.59 | 0.36 | 0.39 | 0.21 | 1.68 | 1.09 | 1.07 | 0.49 |
| 2 | 4.48 | 0.01 | 0.76 | 2.58 | 3.33 | 0.10 | 0.58 | 0.01 | 0.71 | 0.13 | 1.07 | 0.49 |
| 3 | 3.68 | 0.79 | 0.68 | 2.66 | 3.49 | 0.26 | 0.38 | 0.21 | 0.54 | 0.04 | 0.50 | 0.08 |
| 4 | 3.61 | 0.86 | 2.30 | 1.05 | 2.08 | 1.15 | 0.46 | 0.13 | 0.47 | 0.11 | 0.41 | 0.16 |
| 5 | 6.14 | 1.67 | 3.14 | 0.20 | 3.25 | 0.03 | 0.38 | 0.21 | 0.51 | 0.07 | 0.53 | 0.04 |
| 6 | 6.53 | 206 | 3.10 | 0.24 | 3.75 | 0.52 | 0.32 | 0.27 | 0.85 | 0.27 | 0.53 | 004 |
| 7 | 6.69 | 2.22 | 2.50 | 0.85 | 3.36 | 0.13 | 0.51 | 0.09 | 0.48 | 0.10 | 0.89 | 0.31 |
| 8 | 4.56 | 0.09 | 2.55 | 0.80 | 3.64 | 0.41 | 0.43 | 0.17 | 0.50 | 0.08 | 0.47 | 0.10 |
| 9 | 3.89 | 0.58 | 2.35 | 1.00 | 3.39 | 0.16 | 0.38 | 0.22 | 0.77 | 0.19 | 0.65 | 0.08 |
| 10 | 3.62 | 0.85 | 2.88 | 0.47 | 3.68 | 0.45 | 0.95 | 0.36 | 0.81 | 0.23 | 0.47 | 0.10 |
| 11 | 6.51 | 204 | 4.09 | 0.75 | 3.82 | 0.59 | 0.39 | 0.21 | 0.43 | 0.15 | 1.64 | 1.07 |
| 12 | 6.88 | 2.41 | 4.02 | 0.67 | 3.64 | 0.41 | 0.64 | 0.05 | 0.41 | 0.17 | 0.37 | 0.20 |
| 13 | 6.33 | 1.86 | 4.16 | 0.82 | 3.53 | 0.30 | 1.34 | 0.75 | 0.71 | 0.13 | 0.35 | 0.22 |
| 14 | 5.54 | 1.07 | 4.42 | 1.08 | 2.03 | 1.20 | 0.38 | 0.21 | 0.72 | 0.13 | 0.59 | 0.02 |
| 15 | 4.58 | 0.11 | 3.74 | 0.39 | 2.64 | 0.59 | 0.57 | 0.02 | 0.77 | 0.19 | 0.30 | 0.28 |
| 16 | 4.24 | 0.23 | 3.96 | 0.62 | 2.46 | 0.77 | 0.62 | 0.02 | 0.47 | 0.11 | 0.32 | 0.26 |
| 17 | 3.95 | 0.52 | 3.75 | 0.41 | 3.10 | 0.13 | 0.38 | 0.21 | 0.35 | 0.23 | 0.36 | 0.22 |
| 18 | 4.66 | 0.19 | 3.89 | 0.54 | 4.69 | 1.46 | 0.42 | 0.17 | 0.52 | 0.06 | 0.41 | 0.16 |
| 19 | 5.99 | 1.52 | 3.82 | 0.48 | 6.37 | 3.14 | 0.47 | 0.12 | 0.35 | 0.23 | 0.36 | 0.22 |
| 20 | 4.23 | 0.24 | 4.39 | 1.05 | 3.43 | 0.20 | 1.08 | 0.49 | 0.59 | 0.01 | 0.41 | 0.16 |
| 21 | 3.87 | 0.60 | 2.78 | 0.57 | 3.75 | 0.52 | 0.48 | 0.11 | 0.35 | 0.23 | 0.34 | 0.23 |
| 22 | 3.07 | 1.40 | 3.71 | 0.37 | 3.60 | 0.37 | 0.56 | 0.03 | 0.38 | 0.20 | 0.24 | 0.34 |
| 23 | 4.49 | 0.02 | 4.67 | 1.33 | 3.69 | 0.46 | 0.57 | 0.02 | 0.41 | 0.17 | 0.54 | 0.04 |
| 24 | 5.46 | 0.99 | 4.09 | 0.75 | 1.79 | 1.44 | 0.67 | 0.07 | 0.53 | 0.05 | 0.41 | 0.16 |
| 25 | 7.02 | 2.55 | 3.40 | 0.05 | 2.07 | 1.16 | 0.83 | 0.24 | 0.59 | 0.01 | 0.53 | 0.04 |
| 26 | 5.54 | 1.07 | 3.65 | 0.31 | 2.52 | 0.71 | 0.53 | 0.06 | 0.47 | 0.11 | 0.51 | 0.06 |
| 27 | 2.83 | 1.64 | 2.92 | 0.43 | 2.17 | 1.06 | 0.37 | 0.22 | 0.43 | 0.15 | 0.25 | 0.33 |
| 28 | 3.08 | 1.39 | 3.39 | 0.04 | 2.57 | 0.66 | 0.25 | 0.34 | 0.48 | 0.10 | 0.36 | 0.22 |
| 29 | 3.08 | 1.39 | 2.80 | 0.54 | 2.93 | 0.30 | 0.50 | 0.09 | 0.47 | 0.11 | 0.53 | 0.04 |
| 30 | 3.08 | 1.39 | 2.75 | 0.60 | 2.86 | 0.37 | 0.38 | 0.21 | 0.83 | 0.24 | 0.65 | 0.08 |
| 31 | 3.34 | 1.13 | 2.33 | 1.01 | 3.60 | 0.37 | 1.67 | 1.08 | 0.47 | 0.11 | 1.07 | 0.50 |
| 32 | 3.70 | 0.77 | 2.84 | 0.50 | 4.36 | 1.13 | 0.63 | 0.04 | 0.41 | 0.17 | 0.59 | 0.02 |
| 33 | 3.61 | 0.86 | 4.08 | 0.73 | 2.83 | 0.40 | 0.63 | 0.03 | 0.71 | 0.13 | 0.42 | 0.16 |
| 34 | 3.61 | 0.86 | 4.08 | 0.73 | 3.21 | 0.02 | 0.51 | 0.09 | 0.41 | 0.17 | 0.30 | 0.28 |
| 35 | 3.52 | 0.95 | 4.62 | 1.28 | 3.65 | 0.42 | 0.57 | 0.02 | 0.59 | 0.01 | 0.30 | 0.28 |
| 36 | 4.04 | 0.43 | 3.49 | 0.14 | 3.86 | 0.63 | 1.34 | 0.75 | 0.58 | 0.00 | 0.30 | 0.28 |
| 37 | 4.49 | 0.02 | 3.23 | 0.11 | 2.99 | 0.24 | 0.82 | 0.22 | 1.06 | 0.48 | 0.41 | 0.16 |
| 38 | 3.78 | 0.69 | 3.48 | 0.14 | 2.95 | 0.28 | 0.44 | 0.15 | 0.58 | 0.00 | 2.12 | 1.55 |
| 39 | 3.53 | 0.94 | 4.94 | 1.60 | 2.57 | 0.66 | 0.51 | 0.09 | 0.45 | 0.14 | 0.36 | 0.22 |
| 40 | 3.34 | 1.13 | 5.01 | 1.67 | 1.93 | 1.30 | 0.38 | 0.21 | 0.42 | 0.16 | 1.02 | 0.45 |
| Mean value (µm) | 4.47 | 0.99 | 3.34 | 0.80 | 3.23 | 0.62 | 0.59 | 0.21 | 0.58 | 0.16 | 0.57 | 0.25 |
| Maximum value (µm) | 7.02 | 2.55 | 5.01 | 2.66 | 6.37 | 3.14 | 1.67 | 1.08 | 1.68 | 1.09 | 2.12 | 1.55 |
| Minimum value (µm) | 2.83 | 0.01 | 0.68 | 0.44 | 1.79 | 0.02 | 0.25 | 0.01 | 0.35 | 0.00 | 0.24 | 0.02 |
| σ (µm) | 1.22 | 0.69 | 1.03 | 0.64 | 0.85 | 0.57 | 0.30 | 0.22 | 0.24 | 0.18 | 0.38 | 0.28 |
| Number satisfying \|Dₙ - D_{AVE}\| > D_{B}/2 | 19 | | 12 | | 9 | | 1 | | 1 | | 2 | |

Comparison of Examples 1 to 3 with Reference Examples 1 to 3 shows that when the value of the difference D_{R} is 4 µm or more, the anchor effect of the first layer 3 on the surface 2a of the base 2 can be enhanced, thereby improving the adhesion between the base 2 and the second layer 4, that is, the adhesive strength.

Comparison of Examples 1 to 3 with Reference Examples 1 to 3 shows that when the value of the difference D_{R} is 7 µm or more, the anchor effect of the first layer 3 on the surface 2a of the base 2 can be further enhanced, thereby further improving the adhesion between the base 2 and the second layer 4, that is, the adhesive strength.

X-ray diffraction analysis (XRD) was performed on a mirror-polished cross-sectional sample of the ceramic structure 1 of each of Examples 1 to 3 and Reference Examples 1 to 3 obtained above to evaluate crystalline states of the vicinity of the first layer 3 and the base 2.

As a result, it was found that in each of Examples 1 to 3 and Reference Examples 1 to 3, the base 2 contained 97.8 mass% of aluminum oxide as a main phase and 2.2 mass% of sapphirine as a different phase.

In Examples 1 to 3, the vicinity of the first layer 3 contained 94.0 mass% of aluminum oxide and 6.0 mass% of spinel. On the other hand, in Reference Examples 1 to 3, the vicinity of the first layer 3 contained 98.3 mass% of aluminum oxide and 1.7 mass% of sapphirine.

That is, in Examples 1 to 3, it was found that the first layer 3 contained crystals having a spinel crystal structure. This can reduce peeling between the base 2 and the second layer 4 due to thermal expansion and thermal contraction.

Although the embodiment of the present disclosure has been described above, the present disclosure is not limited to the embodiment described above, and various changes can be made without departing from the spirit of the present disclosure.

Additional effects and other aspects can be easily derived by a person skilled in the art. Thus, a wide variety of aspects of the present disclosure are not limited to the specific details and representative embodiments represented and described above. Accordingly, various changes are possible without departing from the spirit or scope of the general inventive concepts defined by the appended claims and their equivalents.

### REFERENCE SIGNS

1 Ceramic structure
2 Base
2a Surface
3 First layer
3a Surface
4 Second layer

## Claims

1. A ceramic structure comprising:
a base comprising a ceramic;
a first layer positioned to be in contact with a surface of the base, the first layer comprising a ceramic having a composition different from a composition in the base; and
a second layer positioned to be in contact with a surface of the first layer, the second layer comprising a metal,
wherein in a cross section intersecting the surface of the base, when
D_{B} is a mean grain size of a main crystal in the base,
D₁ to Dₙ are measured values of thicknesses of the first layer measured every 1 µm, and
D_{AVE} is a mean value of the D₁ to Dₙ,
the first layer has irregularities where |Dₙ - D_{AVE}| is larger than D_{B}/2.

2. A ceramic structure comprising:
a base comprising a ceramic;
a first layer positioned to be in contact with a surface of the base, the first layer comprising a ceramic having a composition different from a composition in the base; and
a second layer positioned to be in contact with a surface of the first layer, the second layer comprising a metal,
wherein in a cross section intersecting the surface of the base, when
y1 is a minimum value of a coordinate position in a layering direction at an interface between the base and the first layer,
y2 is a maximum value of a coordinate position in a layering direction at an interface between the first layer and the second layer, and
D_{R} is a difference between the y2 and the y1,
the D_{R} is 4 µm or more.

3. The ceramic structure according to claim 2, wherein
the D_{R} is 7 µm or more.

4. The ceramic structure according to claim 2 or 3, wherein
when D_{B} is a mean grain size of a main crystal in the base,
D₁ to Dₙ are measured values of thicknesses of the first layer measured every 1 µm, and
D_{AVE} is a mean value of the D₁ to Dₙ,
the first layer has irregularities where |Dₙ - D_{AVE}| is larger than D_{B}/2.

5. The ceramic structure according to claim 1 or 4, wherein
in a measurement range of n = 20, the number of the irregularities is three or more.

6. The ceramic structure according to any one of claims 1 to 5, wherein
the main crystal in the base is aluminum oxide.

7. The ceramic structure according to any one of claims 1 to 6, wherein
constituent elements of the first layer comprise at least one element contained in the base and at least one element contained in the second layer.

8. The ceramic structure according to any one of claims 1 to 7, wherein
the first layer comprises crystals having a spinel crystal structure.
